# EUROPEAN PATENT APPLICATION

(11) **EP 4 668 209 A1**
(43) Date of publication of application: **24.12.2025**
(21) Application number: 25181652.6
(22) Date of filing: 10.06.2025
(51) Int. Cl.: G06T 7/00

(54) **A METHOD AND APPARATUS FOR SUPPORTING AN OPERATION OF A PACKAGING MACHINE**

(30) Priority: 17.06.2024 IT 202400013762
(71) Applicant: TETRA LAVAL HOLDINGS & FINANCE S.A., 1009 Pully (CH)
(72) Inventor: Drusiani, Matteo, 41123 Modena (IT); Mattioli, Emanuele, 41123 Modena (IT)
(74) Representative: Tetra Pak Patent Attorneys

(57) **Abstract**

A computer-implemented method (600) for supporting operation of a packaging machine (100), wherein the packaging machine (100) comprises a camera (120) and a packaging material receiver (118) arranged to receive a packaging material, said method comprising
capturing (602) a first set (SET-1) of image data using the camera (120) at a first point of time (T-1), wherein the first set of image data depicts a first reference mark (REF-1) provided on a first piece (P-1) of the packaging material,
capturing (604) a second set (SET-2) of image data using the camera (120) at a second point of time (T-2), wherein the second set of image data depicts a second reference mark (REF-2) provided on a second piece (P-2) of the packaging material,
determining (606) a measure associated to a common feature of the first and second reference marks (REF-1, REF-2),
identifying (608) a drift of a visual representation of the common feature based on the measure, and
transmitting (610) a visual representation deterioration indication in case the drift fulfills a deterioration criteria.

## Description

### Technical Field

The disclosure generally relates to packaging technology. More particularly, it is presented methods for supporting operation of a packaging machine, an apparatus and a packaging machine.

### Background Art

Today it is known to use vision-based monitoring systems in packaging machines. In some cases these systems capture image data that is later assessed by operators to understand a break-down, misalignments on packages produced or other unwanted effects. It is also known to have cameras with built-in image processing capability making automatic assessment of the captured image data. Such automatic assessment can be to check that caps are correctly placed on packages.

In addition to using vision-based monitoring systems for quality inspection, it is also known to use vision-based systems for barcode or QR code reading such that the packages being produced can be traced throughout the packaging machines, sometimes also referred to as filling machines. In case each package is provided with a package-specific code, it is by way of example possible to fetch machine settings used when producing a certain package at a later point of time.

For roll-fed packaging machines, arranged to continuously form a tube from a web of packaging material and thereafter fill the tube with food product, the barcodes on the packages can be used for determining a tube twist, that is, determining if the tube has been twisted. This information is relevant since, if the tube is twisted, the web may be fed into a transversal sealing station incorrectly such that an improper transversal sealing is made. Even in the case the transversal sealings are made adequately from a package integrity perspective, having the tube fed incorrectly into the transversal sealing station may result in the negative effect that skewed packages are formed. Thus, there are several reasons for continuously monitoring tube twisting. By having the barcodes placed on the web of packaging material such possible source of error may be detected and also compensated for by rollers, arranged upstream the transversal sealing station, that can guide the tube and thereby compensate for the tube twisting.

The barcodes may also be used for monitoring a packaging material overlap in a longitudinal sealing station. When forming the longitudinal sealing, that is, when attaching the two longitudinal edges of the web to each other such that the tube can be formed, the packaging material overlap is formed. To make sure that this overlap is according to pre-set requirements, a vision-based system can be used for continuously monitoring this overlap, and as an effect, provide for that packages with adequate longitudinal sealings are produced.

Even though there are several examples on how vision-based monitoring systems can be used for assuring quality and reducing risks of errors that may result in machine stops, the vision-based monitoring systems may from time to time fail to provide accurate conclusions. Thus, there is a need for even more reliable vision-based monitoring systems in the field of packaging technology to assure even more reliable operation of the packaging machines.

### Summary

It is an object of the invention to at least partly overcome one or more of the above-identified limitations of the prior art. In particular, it is an object to provide methods and apparatuses for supporting a vision-based monitoring system in a packaging machine such that a risk that incorrect or non-accurate conclusions are made.

Generally, the approach suggested herein is based on an insight that a camera of the vision-based systems are often exposed to food product residues, e.g. due to splashing occurring when a tube of packaging material is filled from above via a food product pipe, and that the effect of these food product residues will gradually deteriorate quality of image data generated by the camera over time. An effect of that a field of view of the camera is slowly worsening is that it is difficult to determine when the image data cannot be used for making accurate conclusions. As is described in more detail below, this can be mitigated by making use of that different pieces of packaging material, e.g. pre-forms as well as blanks to be formed into packages, both blanks in the form of sleeve-shaped pieces and blanks in the form of sections of a web of packaging material, are provided with reference marks for identification purposes, positioning purposes etc. Thus, the reference marks already present on the packages can serve the additional purpose of identifying an image data quality drift, and by doing so address the problem of gradually worsening image data quality over time.

The reference marks can share one or more common features even though they may be package-specific and used for identification purposes. By way of example, such common features may include a printed frame forming an outer boundary of the reference marks. By making use of that the different pieces of packaging material fed into the packaging machine, and thereby presented to the camera, comprise these reference marks with at least one common feature, it is possible by capturing the two sets of image data using the camera at two different time points, determining one or more measures related to the one or more common features. For instance, the common feature may be a contrast value between black sections and white sections of a barcode, being a specific form of reference mark. If this value drifts over time, that is, in case a visual representation of the common feature deteriorates over time, e.g. in case the contrast between black and white sections of the barcode depicted in the image data is worsening over time, this can be identified. Once identified, a visual representation deterioration indication, that is, a signal or message indicating that the camera may be obstructed by food products or other objects with the result that it is not possible to make accurate decisions on the image data, can be transmitted to a control unit or an operator device such that appropriate measures can be made, e.g. cleaning the camera.

According to a first aspect it is provided a computer-implemented method for supporting operation of a packaging machine. The packaging machine may comprise a camera and a packaging material receiver arranged to receive a packaging material. The method may comprise capturing a first set of image data using the camera at a first point of time, wherein the first set of image data depicts a first reference mark provided on a first piece of the packaging material, capturing a second set of image data using the camera at a second point of time, wherein the second set of image data depicts a second reference mark provided on a second piece of the packaging material, determining a measure associated to a common feature of the first and second reference marks, identifying a drift of a visual representation of the common feature based on the measure, and transmitting a visual representation deterioration indication in case the drift fulfills a deterioration criteria.

As discussed above, advantages with using this approach is that image data quality deterioration developing over time can be detected in a reliable manner, thereby reducing the risk that decisions are made on image data not correctly depicting features of the reference marks.

The first and second set of image data may be a first and a second image, respectively. Put differently, the first and second set of image data may be a two-dimensional data structure with elements corresponding to incoming light onto different sensor elements of an image sensor of the camera. However, the first and second set of image data may also comprise image data from several cameras or image sensors captured at the first and second point of time, respectively. For instance, the first and second set of image data may be captured by a stereo camera.

The deterioration criteria may comprise a global threshold pre-determined by taking into account historical data from several packages. In addition to the global threshold, the deterioration criteria may comprise minimum number of packages being out of scope, e.g. below the global threshold.

The first and second reference marks may be two-dimensional marks, such as barcodes, provided on the first and second piece , respectively.

By having the reference marks being printed two-dimensional marks it is made possible, due to the possibility of making precise printing with offset printing technology or other high quality printing technology, to make reliable comparisons between reference marks of different pieces of packaging material.

The common feature may be an edge forming part of the two-dimensional marks.

By using one or several edges as the common feature, it is made possible to form contrast values in a computationally efficient manner. One reason for this is that edge detection is an image processing operation that is often built-in in cameras used in vision-based monitoring systems. By way of example, by using a contrast value related to the edge, the process for determining the measure may be reduced to milliseconds, making it possible to handle several thousands of packages per hour. Further, by using this efficient approach, it is made possible to add the functionality of assessing the visual representation deterioration to an existing system. For instance, this approach may be added to an existing camera-based system for tube twisting.

The step of determining the measure associated to the common feature of the first and second reference marks may comprises the sub-steps of determining, for the first and second set, a region of interest of the image data set encompassing the edge constituting the common feature, determining, for the first and second set, an edge detection image of the region of interest, determining, for the first and second set, an image set specific threshold based on pixel values of the edge detection image, determining, for the first and second set, a first mean value for the pixels values of the edge detection image above the threshold and a second mean value for the pixel values of the edge detection image below the threshold, and determining, for the first and second set, a contrast indicator by calculating a distance between the first and second mean value, and wherein the step of identifying the drift of the visual representation of the common feature based on the measure comprises the sub-step of determining the drift of the contrast indicator over time by comparing the contrast indicator of the first set with the contrast indicator of the second set.

The method may further comprise identifying the first piece and/or the second piece based on the first and second reference mark, respectively.

Using the reference marks both for identification purposes and image quality deterioration over time has the advantages that the same marks can be used for dual purposes. Further, for machines already using the reference marks for identification purposes, the functionality of image quality deterioration over time can be added with few hardware adjustments needed.

The first and second piece may be a first and a second section of a web of packaging material, respectively, wherein the second section is placed after the first section.

The method may further comprise forming the web of packaging material into a tube, estimating a tube twist based on the first and second set of image data, and transmitting tube twist data, reflecting the tube twist, to tube guiding rollers such that the tube twist can be compensated for.

By using the same marks for assessing tube twisting and for assessing image data quality deterioration over time, the approach presented herein for assessing the image data quality can be implemented with few or no hardware adjustments in packaging machines already using reference marks for tube twisting assessment.

The method may further comprise estimating a packaging material overlap of the tube based on the image data.

Also in the case the reference marks are used for packaging material overlap assessment, the assessment of the image data quality deterioration over time using the reference marks can be implemented with few or no hardware adjustments.

One and the same camera may be used for identifying the drift of the visual representation of the common feature, estimating a tube twist, and/or estimating a packaging material overlap of the tube.

The visual representation of the common feature in the image data may deteriorate over time due to that food product residues are obstructing a field of view of the camera.

The visual representation deterioration indication may be transmitted to a camera cleaning apparatus arranged to clean the camera such that objects obstructing the field of view of the camera is removed.

An advantage with this feature is that the running time of the packaging machine can be extended. Since food residues can both be detected and removed, an up-time of the packaging machine can be improved.

The camera cleaning apparatus may be an air blower and/or water nozzle arranged to provide a stream of air and/or water such that objects on a lens and/or protective glass of the camera is removed.

According to a second aspect it is provided a computer program product, loadable in a memory of at least one processing unit and comprising instructions suitable for performing the steps of the method according to the first aspect.

The same features and advantages as described above with respect to the first aspect also applies to this second aspect.

According to a third aspect it is provided an apparatus for supporting an operation of a packaging machine. The apparatus may comprise a control circuitry configured to capture a first set of image data using a camera at a first point of time, wherein the first set of image data depicts a first reference mark provided on a first piece of the packaging material, capture a second set of image data using the camera at a second point of time, wherein the second set of image data depicts a second reference mark provided on a second piece of the packaging material, determine a measure associated to a common feature of the first and second reference marks, identify a drift of a visual representation of the common feature based on the measure, and transmit a visual representation deterioration indication in case the drift fulfills a deterioration criteria.

The same features and advantages as presented with respect to the first aspect also apply to this aspect.

According to fourth aspect it is provided a packaging machine comprising a camera, a packaging material receiver arranged to receive a packaging material, and an apparatus according to the third aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a general illustration of a roll-fed packaging machine.
Fig. 2A and 2B illustrate the web and the camera in further detail at a first and second point of time, respectively.
Fig. 3 illustrates part of a tube and a reference mark printed on the tube.
Fig. 4 is a diagram illustrating an aggregated number of pixels for different pixel intensity values of an edge detection image.
Fig. 5 is a diagram illustrating a contrast value, determined based on measures related to the reference marks, as a function of time.
Fig. 6 is a flowchart illustrating a method for supporting operation of a packaging machine.

### Detailed Description

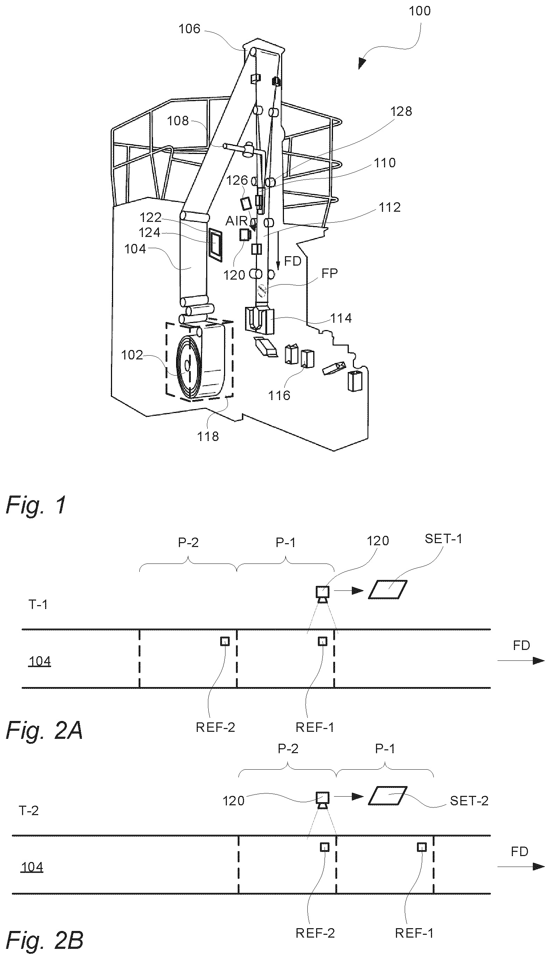

Fig. 1 illustrates by way of example a packaging machine 100 in the form of a roll-fed packaging machine. In such a machine, the packaging material can be provided on a roll (or reel) 102 of packaging material, loaded into a packaging material receiver 118 of the packaging machine 100. From the roll 102 of packaging material, a web 104 of packaging material is formed. The web 104 of packaging material may pass through a sterilization station 106 for removing or reducing a number of unwanted microorganisms from the web 104. The sterilization may e.g. comprise a hydrogen peroxide bath, a Low Voltage Electron Beam (LVEB) device or any other suitable apparatus capable of meeting food safety regulations. Two examples of commercially available roll-fed packaging machines producing carton-based packages is Tetra Pak^{®} A3/Speed and Tetra Pak^{®} A3/CompactFlex.

After sterilization, the web 104 can be formed into a tube 112 by a longitudinal sealing station 110. The tube 112 can be formed by joining two edges of the web 104 by a longitudinal sealing, LS. The wording "longitudinal" herein relates to the longitudinal direction of the web 104 or tube 112 of packaging material. Thus, the longitudinal direction coincides with a feeding direction, FD, in the packaging machine 100. When having formed the tube 112, a food product, FP, can be fed into the tube 112 via a product filling pipe 108, arranged at least partly inside the tube 112.

The filled tube 112 can be fed into a transversal sealing station 114 comprising an induction sealing system or an ultrasonic sealing system. The wording "transversal" herein relates to a direction across the tube (i.e. a transversal direction, TD) once flattened in the transversal sealing station 114. In the transversal sealing station 114, a transversal sealing, TS, is made in a lower end of the tube 112 by using e.g. the ultrasonic sealing system or the induction sealing system. Generally, these systems have two main functions; 1) providing the transversal sealing, i.e. welding two opposite sides of the tube 112 together such that the product in a lower part of the tube 112, placed downward the sealing system is separated from the product in the tube 112 placed upward the sealing system, and 2) cutting off the lower part of the tube such that a package 116 is formed. Alternatively, instead of providing the transversal sealing and cutting off the lower part in one and the same system as illustrated, the step of cutting off the lower part may be made in a subsequent step by a different piece of equipment, or by the consumer if the packages are intended to be sold in a multi-pack. After a package 116 has been formed, it may be folded in a folding station (not shown) thereby forming a finished food package 116.

As illustrated, in the example illustrated, a camera 120 may be placed downstream the longitudinal sealing station 110. By continuously capturing image data depicting the tube 112 and reference marks associated to different sections of the tube 112, it is possible to detect tube twisting, that is, that the tube is misaligned and is at risk to be fed into the transversal sealing station with the longitudinal sealing misaligned, which may in turn result in inadequate transversal sealing and skewed packages. As will be further described below, the image data depicting the reference marks may also be used for identifying a drift of a visual representation of common features of the reference marks. For instance, the reference marks may be barcodes and the common features may be edges between black sections and white sections of the barcodes. By determining a contrast value between the white sections and the black sections of the reference marks, it is made possible to generate a measure that can be a proxy for a general deterioration of image data quality, i.e. to what extent the image data can be relied upon when making conclusions on e.g. the tube twisting. The reason for the image quality deterioration may be that food residues are spilled onto the camera 120. As illustrated, droplets of the food product FP may end up on the camera 120 due to splashing when the food product is filled into the tube 112 via the product pipe 108, but the obstruction of the field of view may also be caused by e.g. condensation on the lens of the camera.

Even though the roll-fed packaging machine is illustrated in fig. 1, the general principle can also be applied to blanks-fed packaging machines, i.e. packaging machines in which blanks, i.e. flat-folded sleeve-shaped pieces of packaging material is loaded into the machines, instead of having the pieces of packaging material fed into the machine in the form of the sections of the web or the tube as illustrated in fig. 1. The general principle can also be applied to PET bottling machines in which the pieces of packaging material are pre-forms loaded into the packaging machine. By having these pre-forms provided with reference marks, the same principle as described above with respect to the roll-fed packaging machine can be applied to identify the drift of the visual representation. Instead of tube twisting, in the PET bottling machines, the reference marks may, by way of example, be used for assuring that the pre-forms are placed correctly during blow molding, that the packages are placed correctly during capping, to identify individual packages, etc.

As illustrated in fig. 1, the packaging machine 100 may comprise an apparatus 122 comprising control circuitry 124, which may in turn comprise one or several processors, one or several memories and a communication device for enabling communication with other devices. As an alternative to being embedded in the packaging machine 100, as illustrated, the apparatus 122 may be external to the packaging machine 100, but communicatively connected thereto. The apparatus 122 may be communicatively connected to the camera 120 such that image data can be transmitted from the camera 120 to the apparatus 122 such that the image data can be processed in the apparatus 122. The image data may however also be processed by using one or more processors and memories comprised in the camera 120. An advantage with having the image processing being performed in the camera 120 is that less data has to be transferred between different devices, that cameras can be added and removed without the need to adapt central computational power, and also in some cases that a more responsive system can be achieved, i.e. that the drift in terms of image quality can be detected quicker compared to having the image data transmitted to and processed elsewhere. Based on the above, the apparatus 122 may be a stand-alone device as illustrated or integrated with the camera 120.

In case it is detected that the image data quality of the image data generated by the camera 120 fulfils a deterioration criteria, or put differently that an image quality criteria is not fulfilled, a visual representation deterioration indication can be transmitted. One option is to have this indication transmitted to a camera cleaning apparatus 126 such that product residues or other objects obstructing the field of view of the camera 120 are removed. Different camera cleaning apparatuses can be used for this purpose, but an air blower may be beneficial to use since compressed air may already be available in the packaging machine for the purpose of assuring air flows between different zones within the packaging machine. In addition, water may be used for removing any particles obstructing the field of view. The air and water may be provided via the same device, or separate devices. It is also possible to only use water, via a water nozzle, for removing the particles.

Further, as illustrated, to compensate for any tube twisting, guiding rollers 128 may be provided such that the tube can be moved into correct position, that is, having the longitudinal sealing aligned with the transversal sealing station and also optionally having a diameter of the tube set in accordance with specifications.

Fig. 2A illustrates the web 104 at a first point of time T-1 in further detail. As illustrated, a first and a second piece P-1, P-2, herein a first and a second section of the web 104, as illustrated, is placed at this point of time such that the camera 120 is placed above a first reference mark REF-1 of the first piece P-1. Image data captured by the camera 120 at this first point of time T-1 and depicting the first reference mark REF-1 is herein referred to as a first set SET-1 of image data. As illustrated in fig. 2B, at a second point of time T-2, the web 104 is fed in the feeding direction FD such that the camera 120 is placed with a second reference mark REF-2 in its field of view, that is, the second piece P-2 is placed in the field of view of the camera 120. The image data generated by the camera 120 at this point of time is referred to as a second set SET-2 of image data, and this set of image data is depicting the second reference mark REF-2. Even though it is herein illustrated that two sets of image data are generated, it is equally possible to generate more than two sets.

The first and second reference marks REF-1, REF-2 may be exactly the same, apart from any deviation that may occur due to printing inaccuracies, and in such case all features of the reference marks may be used as so-called common features that can be used for identifying that there is a drift in image quality, that is, the reference mark is depicted less accurate in the image data over time. Such common features may be edges provided in the reference marks. In case the reference marks are barcodes, the common features may be edges between different sections. These sections may be black or white, which is beneficial in that clear edges are provided. In case the reference marks are used for identification purposes, there are individual features of the different reference marks to make it possible to distinguish the different reference marks from each other, and as a consequence also the different packages associated to the different reference marks. Even in case the reference marks contain individual features, these may also comprise common features. By way of example, the different reference marks may each have a frame of the same size defining an outer boundary of the reference marks. Thus, the concepts described herein can be used for reference marks used for assuring correct alignment or other similar purposes, where individual features of the different reference marks are not required, as well as for reference marks used for identification purposes, where individual features of the reference marks are required.

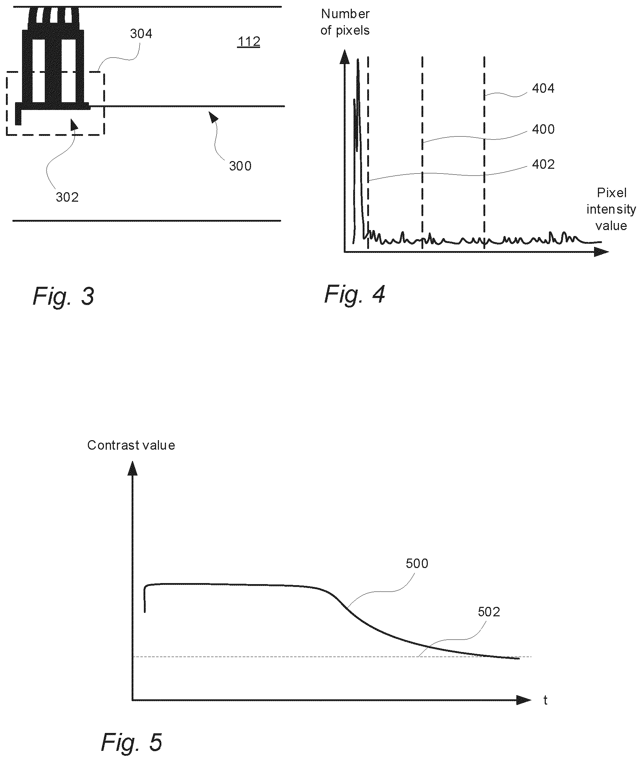

Fig. 3 illustrates the tube 112 and the reference mark 302 in detail. As illustrated, the reference mark 302 is, in this illustrated example, a barcode placed on each side of a packaging material overlap 300, that is, the longitudinal sealing. By having the reference mark placed in this way, the longitudinal sealing can be assessed to see whether or not this is made in accordance with set requirements. A region of interest 304 may be identified in the reference mark 302, and the one or more common features may form part of this region of interest. The image data related to the region of interest may be formed into a pattern extraction image, and based on this pattern extraction image, a vertical edges extraction image, more generally an edge detection image, may be formed. The vertical edges extraction image may be formed by using a Sobel filter. In the vertical edges extraction image, pixels depicting an edge are assigned a high intensity value and pixels depicting no edge are assigned a low intensity value.

Having the region of interest 304 spanning over both sides of the packaging material overlap, or put differently, on both sides of the longitudinal sealing, as illustrated in fig. 3 comes with the benefit that one and the same camera can be used for assessing tube twisting as well as for detecting deterioration in image quality, as described herein. For instance, the image quality assessment described herein can be incorporated in an existing Overlap Tube Twisting Camera (OTTC) used for assessing the tube twisting.

A benefit of having the image quality assessment closely linked to the OTTC is that the image quality assessment can trigger fewer unwanted alarms. By having the region of interest used for the image quality assessment aligned with a region of interest used for the tube twisting assessment, it is namely possible to only assess the image quality of the region of interest that are relevant for the OTTC. Thus, in case there is a local image quality deterioration in a part of the image outside the region of interest 304, hence non-relevant for the OTTC, this may be disregarded, i.e. trigger no alarm.

Fig. 4 is a diagram in which a number of pixels is provided as a function of pixel intensity. As can be seen from the diagram, most pixels of the vertical edges extraction image do not contain any edge and these are therefore assigned low values, that is, part of the peak in a left part of the diagram. As illustrated, when having the number of pixels for different pixel intensity values, an optimal binary threshold may be determined, that is, more generally, an image-specific threshold 400. Such threshold can be determined in different ways. By way of example, Otsu's method may be used.

When having the image-specific threshold 400, a first mean value 402 for the pixels below the threshold can be determined, and a second mean value 404 for the pixels above the threshold can be determined, as illustrated. Based on these two, a contrast indicator can be determined. By way of example, the contrast indicator can be determined by determining a distance between the first and second mean value 402, 404, that is, an absolute value of a difference between the two mean values.

The contrast indicator, herein exemplified as a contrast value 500, may drift over time t as illustrated in fig. 5. As can be seen in the diagram of fig. 5, the contrast value may start off at a high level, but after an initial period of time the contrast value may be lower, that is, the edges of the image data are no longer as well defined as during the initial period of time. A contrast threshold 502 may be used, as an indicator for when the quality of the image data has shifted too much, and when an indication, herein referred to as visual representation deterioration indication, is to be transmitted either to another piece of equipment, such as the camera cleaning apparatus 126, or to an operator device, e.g. a terminal, a tablet or other device used by operator to keep track of the operation of the packaging machine. The contrast threshold 502 may be a global threshold based on historical data from several packages. The contrast value 500 may however be determined package by package.

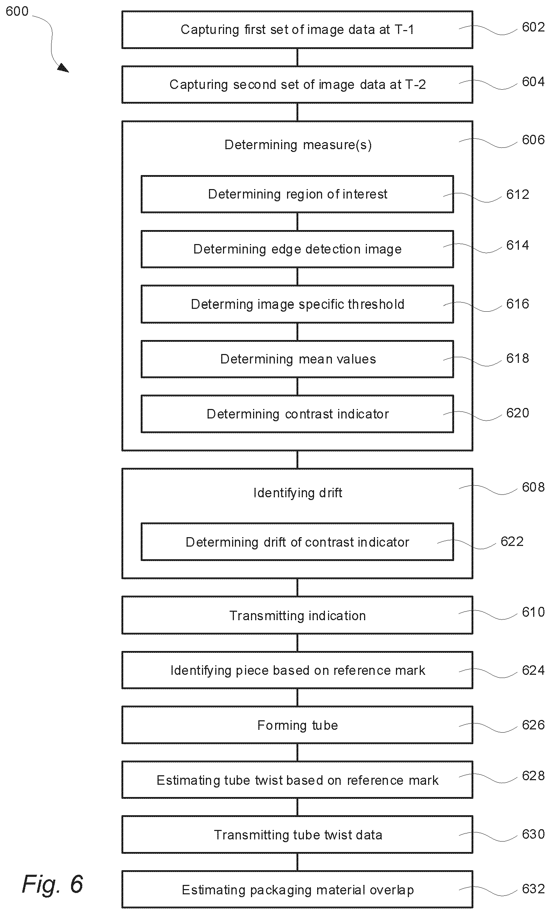

Fig. 6 is a flowchart illustrating a method for supporting operation of the packaging machine 100 by way of example. As illustrated, the method may comprise capturing 602 the first set SET-1 of image data at the first time point T-1, and capturing 604 the second set SET-2 of image data at the second time point T-2. Once having the sets captured, the method may proceed with determining 606 a measure associated with the common feature. Thereafter, the method may continue with identifying 608 the drift of a visual representation of the common feature based on the measure, or measures if several measures are extracted. Thereafter, the method may comprise transmitting 610 a visual representation deterioration indication in the drift fulfills a deterioration criteria, e.g. that the contrast value 500 is below the contrast threshold 502 as exemplified above.

Optionally, the step determining 606 the measure may comprise sub-steps of determining 612 the region of interest, determining 614 the edge detection image, determining 616 the image-specific threshold, determining 618 the first mean value and the second mean value, determining 620 the contrast indicator. The step of identifying 608 may comprise determining 622 the drift of the contrast indicator over time.

Further, the method 600 may comprise identifying 624 the first piece and/or the second piece based on the first and second reference mark, respectively. Put differently, the reference marks may have dual purposes. On one hand, the different pieces, which may be the sections of the web of packaging material, sleeve-shaped blanks to be formed into package, pre-forms, etc, can be identified by the reference marks. On the other hand, the reference marks can be used for determining the image quality deterioration over time by using the reference marks.

Still further, the method may comprise forming 626 the tube, estimating 628 the tube twist, and transmitting 630 tube twist data such that the tube twisting can be compensated for. Thus, the reference marks may also serve a dual purpose by that the reference marks are used for determining the tube twisting as well as the image quality deterioration. Further, it is also possible to have the reference marks arranged such that identification, tube twisting and image data quality deterioration can be assessed by using the same reference marks.

In addition, the method 600 may comprise estimating 632 the packaging material overlap of the tube by using the image data depicting the reference marks. Thus, in addition to the alternatives mentioned above, the reference marks may serve also this purpose.

From the description above follows that, although various embodiments of the invention have been described and shown, the invention is not restricted thereto, but may also be embodied in other ways within the scope of the subject-matter defined in the following claims.

## Claims

1. A computer-implemented method (600) for supporting operation of a packaging machine (100), wherein the packaging machine (100) comprises a camera (120) and a packaging material receiver (118) arranged to receive a packaging material, said method comprising
capturing (602) a first set (SET-1) of image data using the camera (120) at a first point of time (T-1), wherein the first set of image data depicts a first reference mark (REF-1) provided on a first piece (P-1) of the packaging material,
capturing (604) a second set (SET-2) of image data using the camera (120) at a second point of time (T-2), wherein the second set of image data depicts a second reference mark (REF-2) provided on a second piece (P-2) of the packaging material,
determining (606) a measure associated to a common feature of the first and second reference marks (REF-1, REF-2),
identifying (608) a drift of a visual representation of the common feature based on the measure, and
transmitting (610) a visual representation deterioration indication in case the drift fulfills a deterioration criteria.

2. The method according to claim 1, wherein the first and second reference marks (REF-1, REF-2) are two-dimensional marks, such as barcodes, provided on the first and second piece (P-1, P-2), respectively.

3. The method according to claim 2, wherein the common feature is an edge forming part of the two-dimensional marks.

4. The method according to claim 3, wherein the step of determining (606) the measure associated to the common feature of the first and second reference marks (REF-1, REF-2) comprises the sub-steps of
determining (612), for the first and second set (SET-1, SET-2), a region of interest (304) of the image data set encompassing the edge constituting the common feature,
determining (614), for the first and second set (SET-1, SET-2), an edge detection image of the region of interest (304),
determining (616), for the first and second set (SET-1, SET-2), an image set specific threshold based on pixel values of the edge detection image,
determining (618), for the first and second set (SET-1, SET-2), a first mean value (402) for the pixels values of the edge detection image above the threshold and a second mean value (404) for the pixel values of the edge detection image below the threshold, and
determining (620), for the first and second set (SET-1, SET-2), a contrast indicator by calculating a distance between the first and second mean value, and
wherein the step of identifying (608) the drift of the visual representation of the common feature based on the measure comprises the sub-step of
determining (622) the drift of the contrast indicator over time by comparing the contrast indicator of the first set (SET-1) with the contrast indicator of the second set (SET-2).

5. The method according to any one of the preceding claims, further comprising
identifying (624) the first piece (P-1) and/or the second piece (P-2) based on the first and second reference mark (REF-1, REF-2), respectively.

6. The method according to any one of the preceding claims, wherein the first and second piece (P-1, P-2) are a first and a second section of a web (104) of packaging material, respectively, wherein the second section is placed after the first section.

7. The method according to claim 6, further comprising
forming (626) the web (104) of packaging material into a tube (112),
estimating (628) a tube twist based on the first and second set (SET-1, SET-2) of image data, and
transmitting (630) tube twist data, reflecting the tube twist, to tube guiding rollers (128) such that the tube twist can be compensated for.

8. The method according to claim 7, further comprising
estimating (632) a packaging material overlap (300) of the tube (112) based on the image data.

9. The method according to any one of the claims, wherein one and the same camera is used for identifying (608) the drift of the visual representation of the common feature, estimating (628) a tube twist, and/or estimating (632) a packaging material overlap of the tube.

10. The method according to any one of the preceding claims, wherein the visual representation of the common feature in the image data deteriorates over time due to food product residues obstructing a field of view of the camera (120).

11. The method according to any one of the preceding claims, wherein the visual representation deterioration indication is transmitted to a camera cleaning apparatus (126) arranged to clean the camera (120) such that objects obstructing the field of view of the camera is removed.

12. The method according to claim 11, wherein the camera cleaning apparatus (126) is an air blower and/or water nozzle arranged to provide a stream of air and/or water such that objects on a lens and/or protective glass of the camera (120) is removed.

13. A computer program product, loadable in a memory of at least one processing unit and comprising instructions suitable for performing the steps of the method according to any of claims 1 to 12.

14. An apparatus (122) for supporting an operation of a packaging machine (100), said apparatus comprising a control circuitry (124) configured to
capture a first set (SET-1) of image data using a camera (120) at a first point of time (T-1), wherein the first set of image data depicts a first reference mark (REF-1) provided on a first piece (P-1) of the packaging material,
capture a second set (SET-2) of image data using the camera (120) at a second point of time (T-2), wherein the second set of image data depicts a second reference mark (REF-2) provided on a second piece (P-2) of the packaging material,
determine a measure associated to a common feature of the first and second reference marks (REF-1, REF-2),
identify a drift of a visual representation of the common feature based on the measure, and
transmit a visual representation deterioration indication in case the drift fulfills a deterioration criteria.

15. A packaging machine (100) comprising a camera (120), a packaging material receiver (118) arranged to receive a packaging material, and an apparatus (122) according to claim 14.
